## Europäisches Patentamt
## European Patent Office
## Office européen des brevets

(19)

(11) Numéro de publication: **0 064 898**
**B1**

(12)

# FASCICULE DE BREVET EUROPEEN

(45) Date de publication du fascicule du brevet:
**23.01.85**

(51) Int. Cl.⁴: **H 04 N 5/12**

(21) Numéro de dépôt: **82400693.6**

(22) Date de dépôt: **16.04.82**

(54) **Circuit de commande de balayage de télévision.**

(30) Priorité: **27.04.81 FR 8108337**

(43) Date de publication de la demande:
**17.11.82 Bulletin 82/46**

(45) Mention de la délivrance du brevet:
**23.01.85 Bulletin 85/4**

(84) Etats contractants désignés:
**DE FR GB IT NL**

(56) Documents cités:
**FR - A - 2 438 396**
**GB - A - 2 066 598**

(73) Titulaire: **THOMSON-CSF, 173, Boulevard Haussmann, F-75379 Paris Cedex 08 (FR)**

(72) Inventeur: **Van den Driessche, Michel, THOMSON-CSF SCPI 173, bld Haussmann, F-75360 Paris Cedex 08 (FR)**
Inventeur: **Merval, Jean-Marc, THOMSON-CSF SCPI 173, bld Haussmann, F-75360 Paris Cedex 08 (FR)**

(74) Mandataire: **Guérin, Michel et al, THOMSON-CSF SCPI 173, Bld Haussmann, F-75379 Paris Cédex 08 (FR)**

BUNDESDRUCKEREI BERLIN

## Description

La présente invention concerne les récepteurs de télévision, et plus particulièrement les circuits qui permettent d'effectuer le balayage de l'écran de télévision par un spot lumineux qui se déplace ligne par ligne en synchronisme avec un signal vidéo reçu.

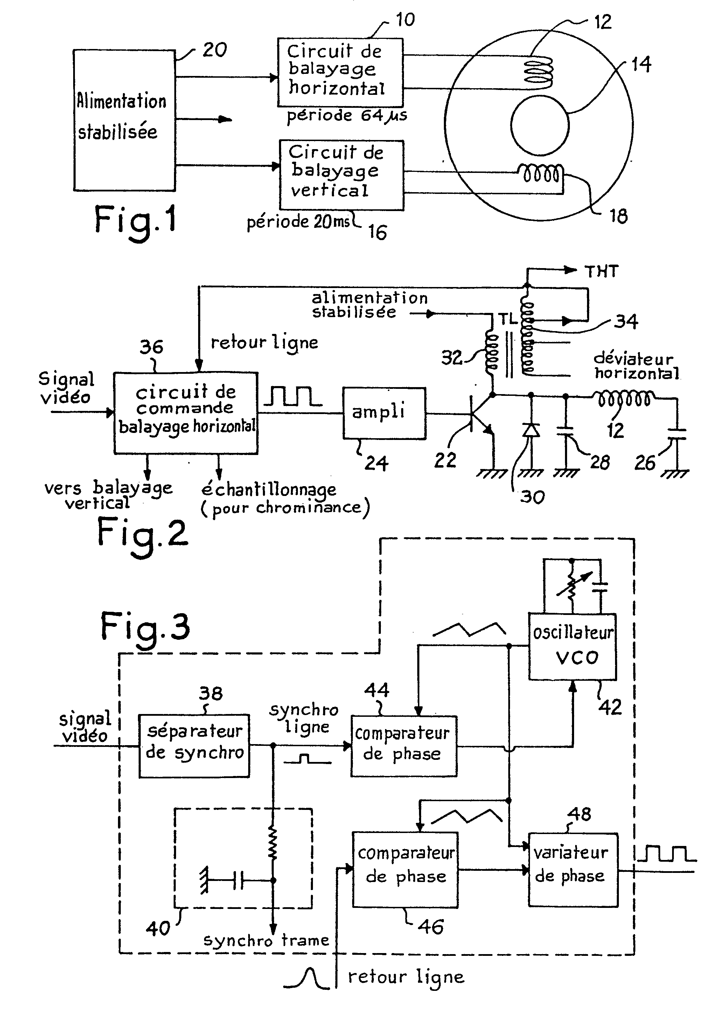

La figure 1 montre schématiquement qu'on prévoit de manière classique un circuit de balayage horizontal 10 qui alimente une bobine de déviation horizontale (déviateur) 12 produisant un déplacement horizontal d'un faisceau électronique émis par un tube cathodique 14, tandis qu'un circuit de balayage vertical 16 alimente une bobine de déviation verticale (déviateur) 18 produisant un déplacement vertical du même faisceau. Dans la norme en vigueur en France, le circuit de balayage horizontal fonctionne à une période de 64 microsecondes et le circuit de balayage vertical à une période de 20 millisecondes.

Ces circuits reçoivent l'énergie nécessaire à leur fonctionnement à partir d'une alimentation stabilisée 20.

A la figure 2, on a représenté un schéma classique de circuit de balayage horizontal. Ce circuit comprend un transistor 22 fonctionnant en commutateur aux bornes d'un circuit oscillant incluant le déviateur 12; un amplificateur 24 commande la base du transistor 22, et un circuit de commande de balayage horizontal 36 établit des créneaux de commande, de période et de rapport cyclique appropriés, destinés au transistor 22.

Le circuit oscillant comprend le déviateur 12 en série avec un condensateur 26, le tout en parallèle avec un condensateur 28 et une diode 30. Ce circuit oscillant est placé en série avec l'enroulement primaire 32 d'un transformateur TL appelé généralement transformateur de ligne, cet enroulement étant lui-même relié à une borne de l'alimentation stabilisée 20, par exemple une borne fournissant une tension d'environ 110 à 160 V.

L'enroulement secondaire 34 du transformateur de ligne fournit diverses tensions, et notamment la très haute tension THT destinée au tube cathodique ainsi que des impulsions dites de retour de ligne qui apparaissent dans le secondaire lors du blocage du transistor 22 et qui sont retransmises, à titre de contre-réaction, au circuit de commande de balayage horizontal 36 qui établit les créneaux de commande du transistor 22.

Le circuit 36 reçoit le signal vidéo sur lequel il se synchronise en vue d'établir ces créneaux. Il fournit, outre ces créneaux, diverses impulsions telles que des impulsions d'échantillonnage pour la sélection des signaux de chrominance, et des signaux destinés à la commande du circuit de balayage vertical.

La disposition des figures 1 et 2 celle qui est utilisée dans la plupart des récepteurs de télévision et dans celui de la présente invention qui concerne notamment une manière particulière de réaliser le circuit de commande de balayage horizontal 36.

A la figure 3, on a représenté un circuit de commande de balayage horizontal tel qu'il en existe actuellement, pour mieux faire comprendre la différence avec la présente invention.

Le signal vidéo reçu est amené à un séparateur de synchro 38 qui sépare du message vidéo proprement dit un créneau de synchronisation de ligne (synchro/ligne) qui apparaît périodiquement toutes les 64 microsecondes et qui se présente différemment toutes les 20 millisecondes, permettant ainsi d'extraire aussi un signal de synchro/trame à la période de balayage vertical (par simple intégration du signal de synchro/ligne dans un intégrateur 40); le signal de synchro/trame est destiné au circuit de balayage vertical 16 (figure 1).

Un oscillateur local 42, à fréquence contrôlée par une tension, établit un signal de période voisine de 64 microsecondes, qui se présente sous forme d'une rampe linéaire croissante suivie d'une rampe décroissante. Ce signal est amené à un comparateur de phase 44 qui reçoit également le signal de synchro/ligne et qui a pour fonction d'établir une tension de commande de fréquence de l'oscillateur 42, cette tension étant directement fonction de l'écart temporel entre le signal de synchro/ligne et la rampe décroissante de l'oscillateur. Il s'agit tout simplement d'une boucle d'asservissement de phase dont la fonction est d'asservir la phase et la fréquence de l'oscillateur au signal de synchro/ligne.

Par ailleurs, compte tenu de la constitution du circuit oscillant incluant le déviateur 12 (voir figure 2), il faut prévoir que les créneaux de commande du transistor 22, qui ont la période de 64 microsecondes définie par la synchro/ligne, ont une phase définie de telle sorte que les impulsions de retour de ligne issues du transformateur de ligne arrivent pendant les instants de suppression de signal vidéo (temps mort de 12 microsecondes pendant lequel arrive la synchro/ligne). Or, compte tenu notamment du retard au bocage du transistor 22, il est nécessaire d'établir des créneaux de commande qui soient en avence de phase par rapport à ces instants de suppression. Les créneaux sont donc établis par une autre boucle d'asservissement de phase qui comprend un comparateur de phase 46 recevant le signal de l'oscillateur d'une part et l'impulsion de retour de ligne d'autre part, ce comparateur de phase 46 commandant un variateur de phase 48 qui fournit des créneaux convenablement déphasés pour que l'impulsion de retour de ligne se situe à un endroit bien déterminé de la rampe de l'oscillateur, rampe qui elle-même est calée sur la synchro/ligne. Le variateur de phase 48 est en fait un simple comparateur qui reçoit d'une part les rampes de l'oscillateur 42 et d'autre part une tension continue variable issue du comparateur de phase 46.

Le but de cette deuxième boucle d'asservissement, but que la présente invention cherche aussi à atteindre, est donc de compenser le retard à la commutation du transistor 22, retard qui peut varier de 1 à 12 microsecondes et qui risque de décaler l'image sur l'écran si l'impulsion de retour de ligne, qui sert à éteindre le spot lumineux pendant le temps de retour du spot au début de la ligne de balayage, ne coïncide pas avec le temps mort prévu à chaque période de ligne dans le signal vidéo.

Ce circuit de la figure 3 est assez simple de conception, mais il présente des inconvénients en ce qui concerne notamment sa précision dans la synchronisation et sa souplesse d'emploi. En particulier, du fait que la synchro/ligne n'est pas tout à fait située au centre du temps mort de 12 microsecondes, il est nécessaire de prévoir des tensions de référence très précises, légèrement décalées l'une par rapport à l'autre pour commander les deux comparateurs de phase. Pratiquement, il faut prévoir un potentiomètre de réglage de position d'image. De plus, pour des questions d'insensibilisation au bruit, il faut prévoir des rampes montante et descendante sensiblement symétriques. Ces considérations font qu'on n'est pas libre du choix de la forme et de la position des rampes de l'oscillateur, de sorte qu'on ne peut pas utiliser ces rampes pour d'autres usages. Si on a besoin ailleurs d'une rampe linéaire pendant toute la durée de la ligne (64 microsecondes), il faut en établir une autre, éventuellement à partir de l'impulsion de retour de ligne. Mais cela nécessite un condensateur supplémentaire et ceci est particulièrement désavantageux si on réalise le circuit sous forme intégrée car le condensateur ne peut être intégré et il faut prévoir une borne de connexion extérieure supplémentaire pour ce circuit intégré.

Un autre circuit a été proposé dans le brevet français 2 438 396. Il utilise deux rampes distinctes, engendrées indépendamment l'une de l'autre, l'une pour définir la durée d'attaque de la bobine de déviation verticale, l'autre pour définir l'instant de début de l'attaque. Cette utilisation de deux rampes conduit à une moins bonne stabilité du balayage.

Un beut de la présente invention est de réaliser un circuit de commande de balayage qui soit intégrable, avec toutes les contraintes d'optimisation que cela suppose.

Un autre but de la présente invention est de fournir un circuit de commande de balayage qui présente de plus grandes possibilités et une plus grande fiabilité dans la synchronisation avec le signal vidéo reçu, et qui ne nécessite pas de réglage de position d'image.

Un autre but de l'invention est de faire en sorte que le circuit présente un grand nombre d'éléments travaillant en commutation plutôt qu'en amplification analogique linéaire.

Un autre but encore de l'invention est de prévoir un circuit électronique facilement intégrable qui incorpore sur une même puce semiconductrice trois sous-ensembles produisant chacun des créneaux à la fréquence de balayage de ligne, ces sousensembles étant destinés respectivement à la commande des étages de puissance des circuits de balayage de ligne et de trame et d'une alimentation stabilisée à découpage, les deux derniers sousensembles utilisant un signal en dents de scie à la fréquence de balayage de ligne, produit et utilisé dans le premier sous-ensemble. Seuls sont exclus du circuit intégré les éléments non facilement intégrables tels que les capacités et résistances de précision ou résistances ajustables ainsi que les éléments de puissance.

Pour atteindre ces buts ainsi que d'autres, la présente invention propose un circuit électronique destiné à assurer la commande des circuits de balayage du spot lumineux d'un écran de télévision en synchronisme avec un signal vidéo reçu, ainsi que l'établissement de différents signaux liés à ce balayage, ce circuit recevant notamment le signal vidéo et une impulsion indiquant le retour de spot lumineux en début de ligne, et fournissant à sa sortie notamment un signal en créneaux à la fréquence de balayage de ligne, de phase variable, pour commander un interrupteur d'attaque d'une bobine de déviation horizontale du spot.

Ce circuit comprend:

— un oscillateur à fréquence contrôlée, de fréquence très supérieure à la fréquence de ligne et mulitple de cette fréquence,

— des diviseurs de fréquence établissant des signaux logiques de fréquences sous-multiples de celles de l'oscillateur, dont notamment un signal de base constitué par un créneau périodique à la fréquence de ligne,

— un circuit logique recevant les signaux aux différentes fréquences et produisant divers signaux logiques à la fréquence de ligne, ces signaux ayant des durées et des phases parfaitement définies par rapport au signal de base,

— un générateur de signal en dent de scie recevant l'un des signaux issus du circuit logique et établissant à partir de ce signal une dent de scie périodique à la fréquence de ligne et parfaitement fixe en phase par rapport au signal de base,

— un séparateur de synchro pour isoler du signal vidéo reçu des signaux de synchro/ligne et de synchro/trame,

— un premier détecteur de coïncidence de phase recevant le signal de synchro/ligne et le signal de base, et pilotant l'oscillateur contrôlé de manière à caler une transition d'origine de ce signal de base sur le signal de synchro/ligne,

— un deuxième détecteur de coïncidence recevant l'impulsion de retour de ligne et un signal logique à la fréquence de ligne, et fournissant une tension fonction d'un écart de phase entre les deux signaux qu'il reçoit,

dans lequel le générateur de signal en dent de scie établit une rampe se terminant très légèrement avant ladite transition d'origine du signal de base calée sur le signal de synchro/ligne, et dans lequel il est prévu en outre un comparateur recevant d'une part la sortie du deuxième détecteur et d'autre part la sortie du générateur de signal en dent de scie, et fournissant des créneaux à la fréquence de ligne, débutant à une position variable en fonction de la tension de sortie du deuxième détecteur, pour commander la circulation d'un courant dans la bobine de déviation horizontale à un instant tel que l'impulsion périodique de retour de ligne qui en résulte se cale par rapport au signal logique reçu par le deuxième détecteur.

Ce signal logique est calé en phase par rapport au signal de base qui, lui-même, se synchronise sur la synchro/ligne. Le choix du calage est effectué de manière que l'impulsion de retour de ligne se retrouve dans le temps mort du signal vidéo.

Ainsi, au lieu qu'un oscillateur fournisse directement un signal à double rampe (qu'on ne peut pas choisir n'importe comment et en particulier qu'on ne peut pas choisir avec un front descendant raide au moment de l'impulsion de retour de ligne), pour définir des instants peu précis par comparaison avec des tensions continues, on produit maintenant, par un circuit logique, des signaux en créneaux présentant des phases et des durées parfaitement définies les unes par rapport aux autres.

On établit notamment un signal de base que l'on synchronise avec la synchro/ligne reçue, et c'est un autre signal logique bien fixé par rapport au signal de base qui sert à centrer l'impulsion de retour de ligne, de sorte que cette dernière se centre automatiquement, sans aucun réglage, dans le temps mort périodique du signal vidéo.

De plus, un autre signal logique sert à établir une rampe périodique en dent de scie, rampe que l'on peut choisir comme on veut car elle n'intervient pas dans la boucle d'asservissement du signal de base sur la synchro/ligne. On verra qu'on choisit cette rampe de sorte qu'elles se termine sensiblement au moment du retour de ligne (lorsqu'il y a synchronisation) et redémarre sensiblement à la fin du retour de ligne.

Cette rampe convenablement choisie pourra alors servir à plusieurs usages, ce qui n'était pas le cas dans la technique antérieure où on devait engendrer plusieurs rampes si on en avait besoin pour d'autres usages que pour la synchronisation du retour ligne sur le temps mort du signal vidéo.

En particulier, on va maintenant se servir de cette rampe unique pour quatre usages qui sont:

— l'établissement de créneaux à phase variable pour la commande du transistor 22 (figure 2),
— l'établissement d'une durée constante pour ces créneaux,
— l'établissement de créneaux de rapport cyclique variable à la fréquence de balayage de ligne pour la commande de modulation, par découpage à cette fréquence de ligne, du courant dans le déviateur vertical,
— l'établissement de créneaux de rapport cyclique variable à la fréquence de ligne pour l'alimentation stabilisée qui est une alimentation à découpage.

Il faut insister sur le fait que ces utilisations ne sont rendues possibles que parce que l'établissement logique de certains signaux permet un choix convenable de la forme du signal en dent de scie.

Enfin, on utilise maintenant le circuit logique pour produire divers signaux à la fréquence de ligne, précisément calés en phase et en durée les uns par rapport aux autres; de même, on l'utilise pour établir des signaux logiques de commande du circuit de balayage de trame, notamment un signal d'effacement de spot en fin de trame, et des signaux de remise à zéro du balayage trame à des instants bien définis en cas de non-réception de synchro/trame.

L'oscillateur fonctionne de préférence à la fréquence de 500 kHz c'est-à-dire produit des signaux dont la période de base est de 2 microsecondes, permettant une résolution de 2 microsecondes pour la production des divers signaux logiques. Cette résolution s'avère parfaitement satisfaisante notamment pour les signaux à la fréquence de balayage de ligne (période 64 microsecondes).

D'autres caractéristiques et avantages de l'invention apparaîtront à la lecture de la description détaillée qui suit et qui est faite en référence aux dessins annexés dans lequel:
— les figures 1 et 2 déjà décrites représentent respectivement l'agencement général des circuits de balayage d'un récepteur de télévision et la constitution du circuit de balayage horizontal;
— la figure 3, également déjà décrite, représente un schéma connu de circuit de commande de balayage horizontal;
— la figure 4 représente le schéma selon l'invention du circuit de commande de balayage horizontal;
— la figure 5 représente un diagramme temporel des impulsions produites par le circuit logique de la figure 4;
— la figure 6 montre un diagramme temporel des signaux établissant les créneaux de sortie du circuit de la figure 4;
— la figure 7 représente un schéma plus détaillé d'un générateur de créneaux de durée constante selon l'invention;
— la figure 8 représente un diagramme temporel explicatif de la figure 7;
— la figure 9 représente un autre schéma de générateur de créneaux de durée constante;
— la figure 10 représente le circuit de balayage vertical;
— la figure 11 représente un schéma de l'alimentation stabilisée à découpage;

— les figures 12 et 13 représentent des diagrammes temporels de signaux logiques produits dans le circuit de commande de balayage vertical.

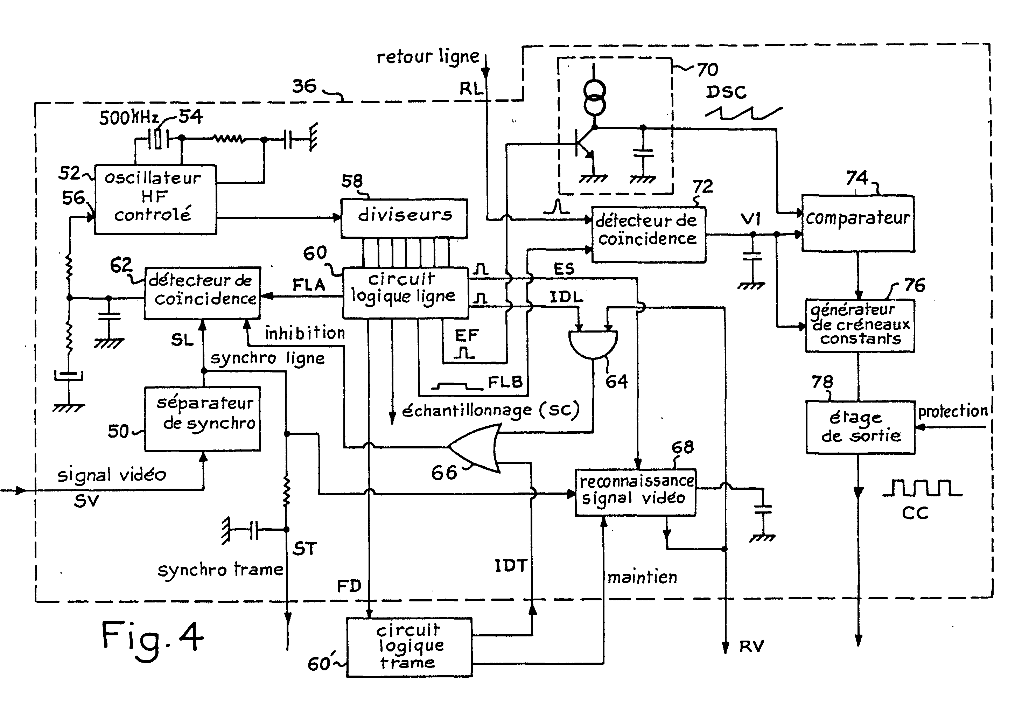

Le circuit de balayage horizontal selon l'invention apparaît donc à la figure 4 à laquelle on se référera maintenant en ayant toujours présent à l'esprit que le circuit de la figure 4 correspond au circuit 36 de la figure 2 et que son but est donc d'abord de produire des créneaux, à la fréquence de balayage de ligne, pour assurer la commutation du transistor 22 de telle manière que le spot lumineux se déplace linéairement pendant la réception du signal vidéo et qu'il revienne à son point de départ, rapidement, pendant le temps mort où on ne reçoit plus de signal vidéo, temps mort au cours duquel apparaît le signal de synchroligne (sous forme d'un créneau dont la durée est normalisée et égale à 4,7 microsecondes dans les systèmes SECAM et PAL). Bien entendu, le spot est éteint pendant son retour, retour qui correspond à l'apparition de l'impulsion de retour de ligne dans le transformateur de ligne.

Le circuit de la figure 4 reçoit donc un signal vidéo SV qui incorpore, toutes les 64 microsecondes, le signal de synchroligne SL qui dure 4,7 microsecondes et qui se situe dans le temps mort d'une durée de 12 microsecondes.

Le signal de synchro/ligne SL est séparé de manière classique du signal vidéo SV par un séparateur de synchro 50. Par intégration de la synchro/ligne, on produit le signal de synchro/trame ST, qui est un créneau dont les apparitions définissent la périodicité de trame (20 millisecondes).

Le circuit de commande de la figure 4 reçoit également l'impulsion de retour de ligne RL issue du transformateur de ligne.

En ce qui concerne les sorties du circuit, elles sont constituées: par le signal de synchro/trame ST qui es destiné au circuit de balayage de trame; par un signal RV qui est un signal de reconnaissance vidéo, indiquant d'une part la présence d'un signal vidéo SV à l'entrée du circuit et d'autre part la synchronisation du circuit de balayage sur ce signal SV; par des signaux d'échantillonnage à la fréquence de ligne, notamment un signal SC (pour »Sand-Castle«) définissant un instant de réception de signal de calage de chrominance; par une fréquence de référence FD qui est destinée au circuit de balayage vertical; enfin, par des créneaux de commande de commutation CC à la fréquence de ligne, destinés au transistor 22.

Un oscillateur 52, couplé à une céramique piézoélectrique 54, produit un signal oscillant à une fréquence de 500 kHz. Cet oscillateur est contrôlé en fréquence par une entrée 56 recevant une tension continue. Le signal oscillant est transmis à un ensemble 58 de diviseurs de fréquence qui sont des compteurs binaires fournissant un certain nombre de fréquences, sous-multiples binaires de la fréquence de l'oscillateur, à un circuit logique (60, 60') destiné à établir différentes formes de signaux logiques pour le circuit de balayage horizontal et pour le circuit de balayage vertical. Pour la commodité de la compréhension, on a représenté ce circuit logique en deux parties dont l'une (60) correspond plus spécialement à la commande du balayage ligne et l'autre (60') à la commande du balayage trame.

Parmi les fréquences sous-multiples de la fréquence de 500 kHz, on peut noter plus particulièrement un signal de base FLA à la fréquence de ligne (période 64 microsecondes) et le signal FD de fréquence double (32 microsecondes), destiné au circuit de balayage de trame.

Le signal FLA définit une origine (par exemple transition descendante du signal FLA) servant de référence pour le calage en phase de l'ensemble du circuit de la figure 4 sur le signal des synchro/ligne SL extrait du signal vidéo SV.

Un détecteur de coïncidence 62 reçoit le signal FLA et la synchro/ligne SL; il établit une tension continue fonction de l'écart entre l'origine du signal FLA et le milieu du créneau de 4,7 microsecondes du signal SL. Cette tension continue, appliquée à l'oscillateur 52, fait varier sa fréquence et sa phase jusqu'à annuler cet écart.

Les détecteurs de coïncidence de ce type sont classiques et sont du domaine connu pour l'homme du métier. Un exemple de détecteur comprend un étage différentiel dont les entrées reçoivent les impulsions à faire coïncider et dont une branche recopie le courant de l'autre, un courant de déséquilibre étant créé par la non-coïncidence et servant à charger ou décharger un condensateur selon le signe et la durée du déséquilibre.

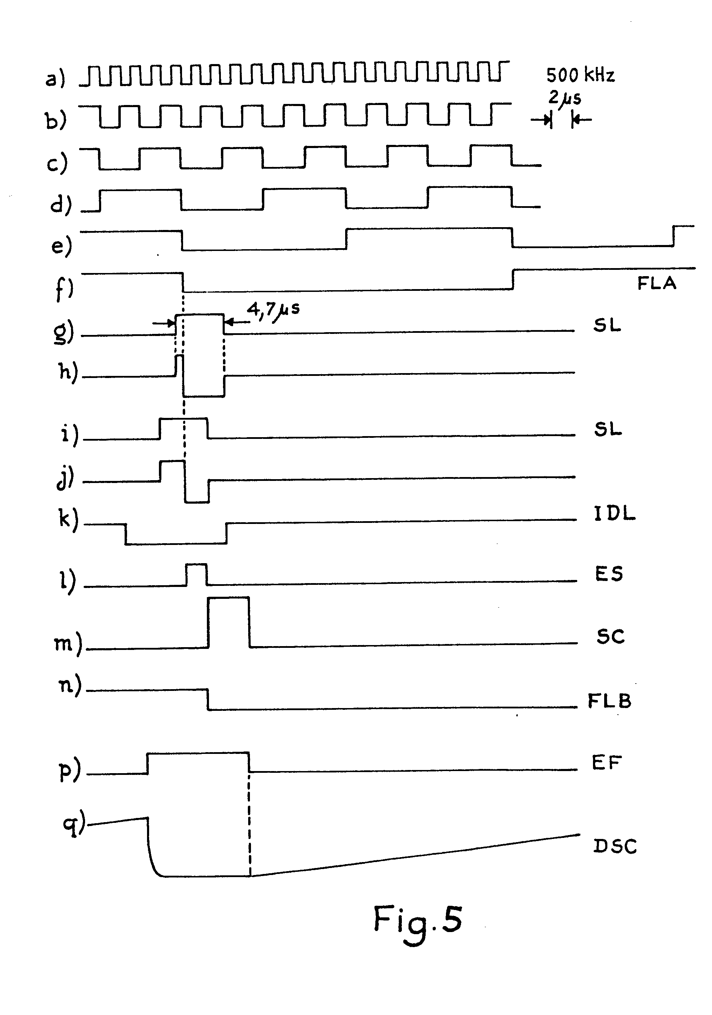

La figure 5 montre un certain nombre de signaux logiques relatifs à cet asservissement: la ligne a montre les signaux de l'oscillateur à 500 kHz; les lignes b, c, d, e et f montrent les fréquences sous-multiples obtenues par les diviseurs binaires 58, la ligne f représentant le signal de base FLA à la fréquence de ligne.

La ligne g représente un créneau du signal de synchroligne supposé non synchronisé par rapport à la transition descendante du signal FLA; la ligne h représente le courant de déséquilibre qui en résulte dans le détecteur 62, courant qui est intégré pour modifier la tension de commande de fréquence de l'oscillateur.

La ligne i montre un créneau de synchro/ligne SL correctement synchronisé par rapport au signal FLA, et la ligne j montre qu'il en résulte un courant de déséquilibre symétrique dont l'intégration ne modifie pas la tension continue de commande de l'oscillateur.

La boucle d'asservissement qui vient d'être décrite permet donc de caler le signal FLA sur le milieu du signal de synchronisation de ligne SL, sans utiliser de rampe linéaire comme dans la technique antérieure.

On notera qu'on prévoit de préférence selon l'invention une inhibition du détecteur de coïncidence 62 après que la synchronisation ait été effectuée. Cette inhibition évite que l'oscillateur 52 ne réagisse à des bruits transmis dans le signal de synchro SL. Mais, bien entendu, il faut que l'oscillateur puisse se raccrocher si la synchronisation est perdue à un moment donné ou évidemment au démarrage du circuit. Le circuit logique 60 permet de réaliser cette inhibition avec des moyens simples.

Tout d'abord la ligne k de la figure 5 montre qu'on produit un créneau IDL d'inhibition du détecteur de coïncidence, qui dure de préférence 10 microsecondes, centré sensiblement autour du début du signal de base FLA et ayant la même période. Ce signal IDL, établi par le circuit logique 60 et par conséquent obligatoirement fixe par rapport au signal FLA, est transmis à une entrée d'inhibition du détecteur 62, par l'intermédiaire d'une porte 64 qui ne laisse passer le signal IDL que si elle est validée par un signal de reconnaissance vidéo RV dont on reparlera plus loin, et par l'intermédiaire d'une porte 66 qui transmet en plus un autre signal d'inhibition IDT issu du circuit de balayage de trame. La détecteur de coïncidence 62 est donc inhibé pendant le créneau du signal IDL, si toutefois un signal vidéo synchronisé est reconnu présent, et pendant un créneau IDT qui apparaît à chaque période de trame aux environs de la fin du balayage de trame.

L'utilité du créneau d'inhibition IDT provient de ce que le signal de synchro/ligne SL est modifié à la fin du balayage de trame; par concéquent, si l'oscillateur 52 continuait à se caler sur le signal SL, des perturbations nuisibles se produiraient. La modification de la synchro/ligne commence en fait avant l'apparition de la synchro/trame et c'est pourquoi on établit, par le circuit logique de trame 60', un signal IDT commençant avant les perturbations du signal SL et se terminant après. En pratique, le signal IDT peut commencer environ 0,2 ms avant le début du signal de synchro/trame ST et se terminer 0,1 à 0,2 ms après. Ce signal IDT est produit par le circuit logique 60'.

L'inhibition du détecteur de coïncidence 62 n'a lieu pendant le signal IDL que si un signal vidéo a été reconnu présent et synchronisé. Par conséquent, un circuit de reconnaissance de signal vidéo 68 fournit à la porte 64 le signal de reconnaissance vidéo RV, qui d'ailleurs est utilisé pour d'autres fonctions (notamment pour couper l'amplificateur sonore du récepteur en recherche d'émission).

Le circuit de reconnaissance 68 reçoit le signal SL ainsi qu'une impulsion d'échantillonnage ES, encore établie par le circuit logique 60, donc calée par rapport aux autres signaux logiques. Cette impulsion d'échantillonnage a une durée de 2 micro-secondes et une période de 64 microsecondes comme le signal FLA; elle a pour caractéristique d'être localisée dans le temps à un endroit où elle est certainement encadrée par le créneau de synchro/ligne SL s'il est synchronisé avec le signal FLA. Par exemple, l'impulsion d'échantillonnage de synchro ES débute à l'origine du signal FLA et se termine 2 microsecondes après. Cette impulsion est représentée à la ligne 1 de la figure 5. Le circuit de reconnaissance 68 est alors simplement une porte ET suivie d'un condensateur qui se charge pendant la durée de coïncidence du signal de synchronisation SL et de l'impulsion d'échantillonnage ES.

L'intégration se fait sur plusieurs périodes de balayage de ligne de manière à obtenir une tension continue stable indiquant la reconnaissance d'un signal vidéo. Si la synchronisation disparaît, la teusion disparaît également du fait que l'impulsion ES sort du créneau SL. La durée du signal ES a été donnée égale à 2 microsecondes. Elle peut être différente, mais une durée de 2 microsecondes est particulièrement facile à obtenir à partir de l'oscillateur à 500 kHz pour remplir convenablement la fonction désirée. Cette courte durée élimine partiellement la bruit existant dans la synchro/ligne SL.

Lorsque la synchronisation disparaît, l'inhibition du détecteur de coïncidence 62 cesse et il recherche à nouveau la synchronisation.

On peut d'ailleurs prévoir que la plage de capture de l'oscillateur 52 soit modifiée en fonction de la reconnaissance d'un signal vidéo, afin que la plage de capture soit large lorsqu'il n'y a pas de signal vidéo reconnu, et soit plus faible (avec une meilleure immunité au bruit) lorsque le signal vidéo est présent. Cette modification se fait en commutant la constante de temps d'intégration du courant du détecteur de coïncidence 62 en fonction du signal RV.

Il est à noter qu'on peut prévoir une entrée de maintien sur le circuit de reconnaissance 68, entrée qui empêche la disparition du signal de reconnaissance RV pendant la synchro/trame ST. En effet, pendant la synchro/trame ST, le signal de synchro/ligne SL est modifié de telle manière que le signal RV risque de disparaître. Un signal de maintien est donc établi à cet effet pendant la durée du retour de trame. Ce signal peut être le signal ST luimême ou être établi par le circuit logique 60'.

Parmi les autres signaux à la fréquence de ligne issus du circuit logique 60, on trouve, représenté à la figure 5 ligne m, un signal d'échantillonnage SC qui est le signal dit »Sand-Castle«, utile pour la définition de l'instant de réception de salves de chrominances: début 2 microsecondes après FLA; durée 4 microsecundes.

A la ligne n de la figure 5, on a représenté un signal FLB qui est pratiquement le signal de base FLA décalé de 2 microsecondes, toujours de manière logique de sorte que ce décalage est bien stable. Le signal FLB a un intérêt que l'on expliquera plus loin pour assurer la précision de la synchronisation entre l'impulsion de retour de ligne RL et le temps mort du signal vidéo.

A la ligne p de la figure 5, on a représenté un créneau d'une durée de 10 microsecondes et de période 64 microsecondes, créneau que l'on peut appeler créneau d'effacement de dent de scie EF; établi par le circuit logique 60, il est sensiblement centré autour de l'origine du signal FLA: par exemple il commence 4 microsecondes avant et se termine 6 microsecondes après. Ce créneau a une grande importance puisqu'il définit la fin et le début d'un signal en dent de scie DSC servant non seulement au circuit de balayage horizontal, mais aussi au circuit de balayage vertical et à la commande de l'alimentation stabilisée à découpage.

La dent de scie DSC créée à partir du créneau EF est représentée à la ligne q de la figure 5. Cette dent de scie est établie par un générateur de dents de scie 70 (figure 4) qui peut comporter un ensemble en série d'une capacité et d'un générateur de courant, la capacité pouvant être court-circuitée par un transistor dont la base est commandée par le signal EF. Pendant la présence du créneau, la capacité est court-circuitée et la tension à ses bornes s'annule. En dehors du créneau, la tension croît linéairement jusqu'à l'apparition du créneau suivant.

En ce qui concerne le circuit de balayage horizontal, le but du signal en dent de scie DSC est d'abord de disposer d'une rampe linéaire à chaque période de ligne, permettant, par comparaison avec une tension continue, de définir un instant de démarrage d'un créneau dont l'origine de phase dépendra évidemment du niveau de cette tension. Mais, cette dent de scie a d'autres usages, aussi bien pour le balayage horizontal que pour le balayage vertical et pour l'alimentation stabilisée de l'ensemble. Il est important à cet égard de remarquer que le choix de la position de la dent de scie, donc du créneau logique EF par rapport au signal de base FLA est fait en sorte que lorsqu'il y a synchronisation du signal FLA sur la synchro/ligne SL et du retour ligne RL sur le temps mort du signal vidéo, le créneau EF coïncide justement à peu près avec le retour ligne.

Ce choix de la position de la dent de scie, choix qui ne pouvait se faire dans la technique antérieure, est important pour que la même dent de scie puisse servir aux différents usages que l'on a déjà mentionnés et que l'on précisera plus loin.

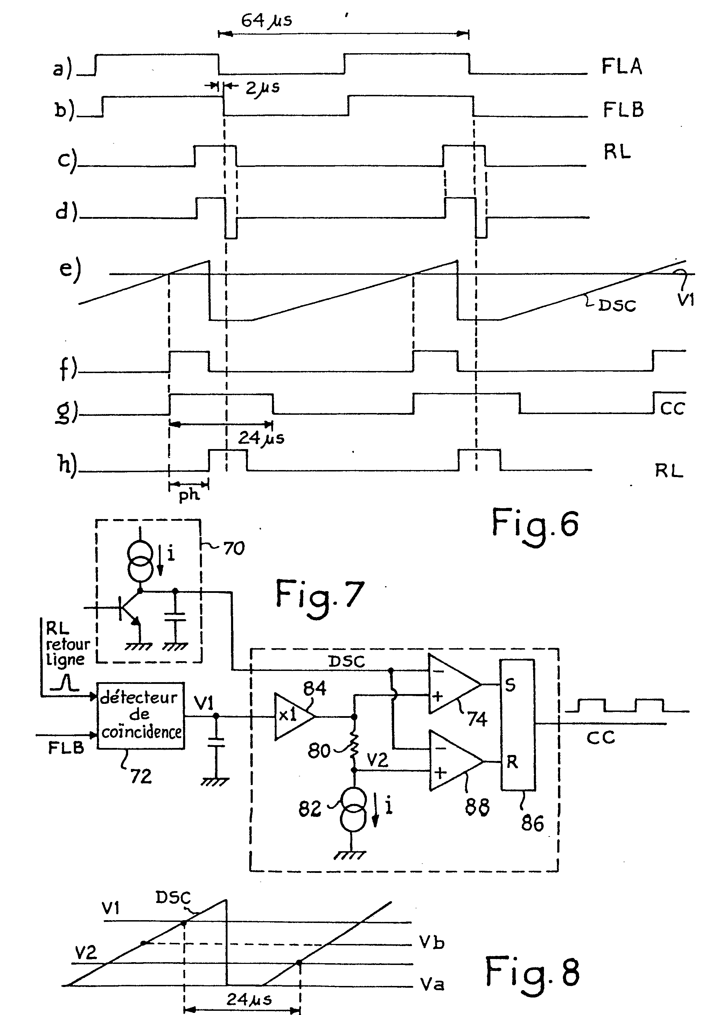

La figure 6 montre les diagrammes temporels de différents signaux établis à partir de la dent de scie DSC pour faire en sorte que les créneaux d'attaque du transistor 22 du circuit du déviateur horizontal donnent bien lieu à une impulsion de retour de ligne RL pendant l'intervalle périodique de suppression de ligne (12 microsecondes).

C'est à cet endroit qu'on peut noter l'intérêt du signal FLB, décalé de 2 microsecondes par rapport au signal de base FLA: en effet, si on établissait la commande du transistor 22 de manière que l'impulsion de retour de ligne RL se centre sur l'origine du signal FLA, cette impulsion ne serait pas parfaitement centrée sur l'intervalle de suppression du signal vidéo dont le créneau de synchro/ligne SL est quant à lui centré sur l'origine du signal FLA. On rétablit ce centrage du retour ligne RL en lui donnant comme position de référence l'origine de FLB en retard de 2 microsecondes sur celle de FLA.

A une échelle différente de la figure 5, la figure 6 montre le signal FLA sur la ligne a et le signal FLB sur la ligne b. L'impulsion de retour de ligne RL, écrêtée, est représentée à la ligne c. L'impulsion RL et le signal FLB sont amenés aux deux entrées d'un second détecteur de coïncidence 72 (figure 4), dans lequel s'établit un courant de déséquilibre de la forme représentée à la ligne d de la figure 6: ce courant débute avec l'impulsion de retour de ligne, s'inverse à la transition descendante du signal FLB, et se termine à la fin de l'impulsion RL. Une capacité intègre ce signal pour fournir une tension continue dont les variations représentent les variations de centrage de l'impulsion de retour de ligne sur l'origine du signal FLB. Cette tension continue de sortie du détecteur de coïncidence 72 est appliquée à une entrée d'un comparateur 74 qui reçoit sur une autre entrée le signal en dent de scie issu du générateur 70. Le comparateur 74 bascule lorsque la dent de scie franchit la tension continue issue du détecteur 72. La sortie du comparateur consiste donc en créneaux débutant à un point variable de la dent de scie dont on rappelle qu'elle est bien définie en phase par rapport aux signaux issus du circuit logique 60 et donc par rapport au signal de synchro/ligne reçu. Comme le retard entre l'instant de commutation du transistor 22 (figure 2) et l'apparition du retour ligne RL peut varier entre 1 et 12 microsecondes, il est très intéressant de disposer d'une dent de scie dont la partie linéaire se termine sensiblement au moment où risque d'apparaître le retour ligne et pas avant.

Les créneaux issus du comparateur 74 ne sont pas appliqués directement au transistor 22 de commande de la bobine de déviation horizontale. En effet, les créneaux de sortie du comparateur 74 n'ont pas une largeur constante si la tension de sortie du détecteur de coïncidence 72 varie; or, ceci est un inconvénient car il faut assurer, à chaque blocage du transistor, une évacuation complète des charges stockées dans le collecteur. On prévoit donc, en sortie du comparateur 74, un générateur 76 de créneaux de largeur constante qui débutent au même moment que les créneaux du comparateur 74. Ces créneaux peuvent avoir une durée de 24 microsecondes.

Le générateur 76 est suivi d'un étage de sortie 78 qui fournit les créneaux CC destinés à la commande du transistor 22. Cet étage de sortie 78 peut être pourvu d'une entrée d'inhibition assurant une protection du circuit de balayage horizontal dans certains cas, comme par exemple en cas de dépassement excessif de tension au niveau de l'alimentation stabilisée.

La figure 6 montre à la ligne e, pour expliquer ce qui précède, la dent de scie DSC et la tension V1 issue du détecteur de coïncidence 72 après intégration. La ligne f montre, en conjonction avec la ligne e, les instants de démarrage des créneaux issus du comparateur 74. Ces créneaux se terminent aux fronts de descente des dents de scie et ont donc une largeur variable selon le niveau de V1.

La ligne g montre les créneaux CC établis à partir des créneaux de la ligne f et ayant une largeur constante de 24 microsecondes (par exemple).

Enfin, la ligne h montre les impulsions de retour de ligne RL qui sont engendrées sous l'effet de la commande du transistor 22 par les impulsions CC de la ligne g. Ces impulsions apparaissent avec un déphasage ph qui est dû à la structure du circuit du déviateur horizontal. Le système de rebouclage du retour de ligne RL sur le détecteur de coïncidence 72 agit pour avancer les créneaux CC si les impulsions RL étaient en retard et pour les retarder si elles étaient en avance, de sorte qu'il s'établit rapidement un équilibre où les signaux RL sont centrés sur le signal FLB, les créneaux CC les précédant d'une avance de phase ph.

Une manière pour établir les créneaux CC de largeur constante et de position variable est indiquée en référence aux figures 7 à 9; les figures 7 et 9 donnent deux réalisations possibles tandis que la figure 8 montre le diagramme temporel à partir duquel on établit ces réalisations.

L'idée utilisée se fonde sur la remarque que le signal en dents de scie DSC est parfaitement linéaire et stable. Par conséquent, un intervalle de temps fixe de 24 microsecondes correspond directement à un intervalle de tensions, comme le montre la figure 8, la correspondance ne dépendant pas de l'origine de l'intervalle. On voit sur la figure 8 une tension V1 et une tension V2 qui coupent les rampes du signal DSC en des points séparés les uns des autres par une durée qui ne dépend que de la différence V1−V2. Ici, V1 est la tension de sortie du détecteur de coïncidence 72 et l'intersection d'une rampe du signal DSC avec V1 définit l'origine d'un créneau; l'intersection de la rampe suivante avec une tension V2 définit la fin du créneau, V2 étant une tension établie des telle manière que la différence V1−V2 soit constante et corresponde à la durée choisie pour les créneaux.

A la figure 7, la tension V2 s'obtient en appliquant à un ensemble en série d'une résistance 80 et d'une source de courant constant 82, la tension V1, à travers un adaptateur d'impédance 84 (qui empêche la décharge du condensateur de sortie du détecteur de coïncidence 72). La tension V2 est prise aux bornes de la source de courant 82 et la différence V1−V2 est bien constante puisqu'elle correspond à la chute de tension produite dans la résistance 80 par le courant constant de la source 82. Le courant et la résistance sont choisis en fonction de la pente de la dent de scie.

Selon un perfectionnement supplémentaire, on prévoit même que la valeur du courant de la source 82 est égale ou proportionnelle à la valeur de la source de courant du générateur de dents de scie 70, pour rendre V1−V2 proportionnelle à la pente de la dent de scie et donc l'intervalle de temps indépendant de cette pente si elle devait varier. On sait bien réaliser, en circuits intégrés, des sources de courant se recopiant.

Pour produire les créneaux de 24 microsecondes, on utilise un premier comparateur qui est en fait le comparateur 74 de la figure 4 et qui reçoit sur une entrée la tension V1 et sur une autre entrée le signal DSC. La sortie du comparateur actionne l'entrée de basculement S d'une bascule RS 86 qui délivre un créneau démarrant lorsque la dent de scie dépasse la tension V1. Un autre comparateur 88 reçoit sur une entrée la tension V2 et sur l'autre entrée le signal en dents de scie DSC. Ce comparateur 88 actionne une entrée R de remise à l'état initial de la bascule 86, de sorte que le créneau de sortie de celle-ci se termine lorsque la rampe suivante du signal en dents de scie dépasse la tension V2.

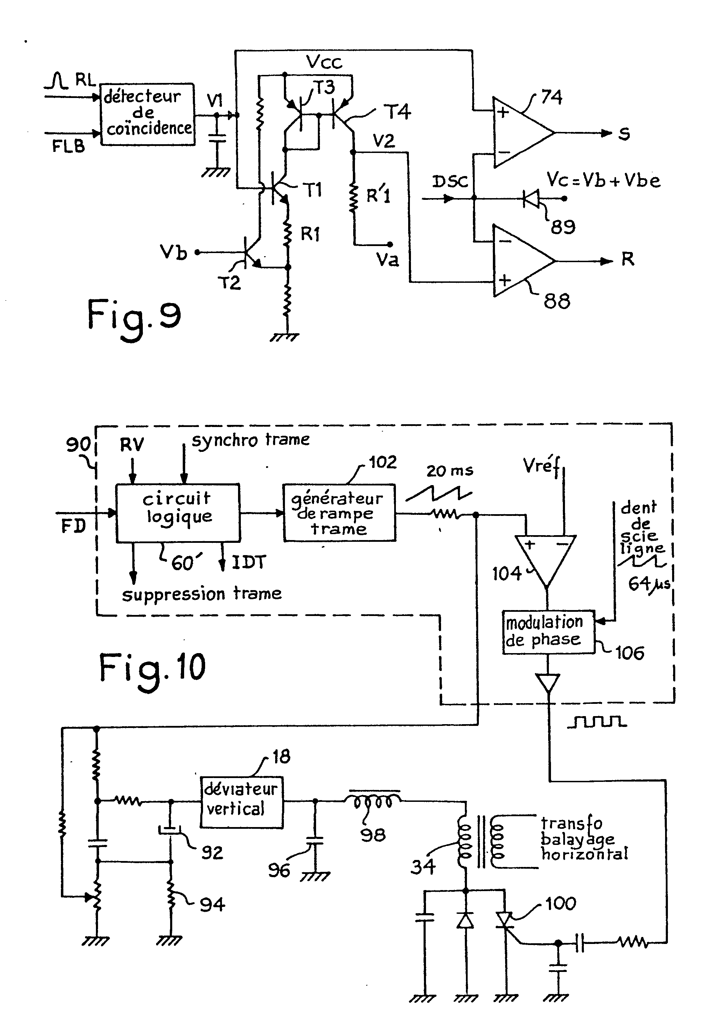

La figure 9 montre une variante de réalisation du générateur 76 de créneaux de durée constante. Elle se fonde sur la remarque que si on définit une tension de référence Va qui correspond aus bas de la rampe DSC et une autre tension de référence Vb qui correspond à la limite supérieure d'excursion autorisée pour le début des créneaux CC, on aura tonjours V1−Vb positif et on peut définir V2 tel que V2−Va = V1−Vb (V2 étant, comme à la figure 7, la tension qui donne lieu à l'arrêt du créneau par comparaison avec la dent de scie). Si on rajoute à Va une tension égale à la tension V1−Vb, on obtiendra, quelle que soit V1, donc quel que soit le point de démarrage des créneaux CC, une durée fixe entre le passage d'une rampe à V1 et le passage de la rampe suivante à V2 = Va + V1−Vb.

Le schéma de la figure 9 comprend une résistance R1 aux bornes de laquelle on applique la tension V1−Vb par l'intermédiaire de deux transistors T1 et T2. Le courant dans cette résistance traverse un troisième transistor T3 dont on recopie le courant par un transistor T4 (bases et émetteurs de T3 et T4 sont communs). Le transistor T4 sert de source de courant pour une résistance R'1 égale à R1, une borne de R'1 étant reliée à la tension de référence Va.

Il est facile de voir que la tension sur l'autre borne de R'1 est V2 = Va + V1−Vb. Comme à la figure 7, V1 est appliquée au comparateur 74 dont une autre entrée reçoit la dent de scie DSC. V2 est appliquée au comparateur 88 qui reçoit par ailleurs la dent de scie. Les sorties des comparateurs commandent la bascule RS 86. De plus, la dent de scie appliquée est écrêtée à la tension Vb pour ne conserver que la partie de dent de scie au-dessus de Vb. Ceci est effectué par une diode 89 reliée entre le point d'application de la dent de scie DSC et une tension de référence Vc = Vb + une chute de tension directe de diode.

Les tensions de référence Va, Vb, Vc sont des références internes du circuit intégré, qu'il est facile de choisir aux valeurs souhaitées.

Ce dispositif a l'avantage de ne pas poser de problème lors du démarrage du circiut.

Les dispositifs des figures 7 et 9 sont particulièrement avantageux car ils n'utilisent pas de bascule monostable qui nécessiterait une capacité supplémentaire. D'autre part, que ce soit pour définir le début ou la fin des créneaux CC, on ne travaille pas directement à partir du circuit logique 60 pour ne pas être limité en résolution dans la précision de positionnement des créneaux CC donnant des retour/ligne centrés sur le signal FLB: si le circuit logique définissait l'origine et/ou la fin des créneaux CC, ce serait pratiquement à 2 microsecondes près, risquant d'introduire des fluctuations brusques entre les périodes successives de ligne. Au contraire, on utilise une définition des créneaux à partir d'une rampe linéaire. La deuxième utilisation de la rampe est encore rendue possible parce que sa position et sa forme ont été convenablement définies à l'aide du circuit logique 60.

Une troisième utilisation concerne la partie de commande de balayage de trame.

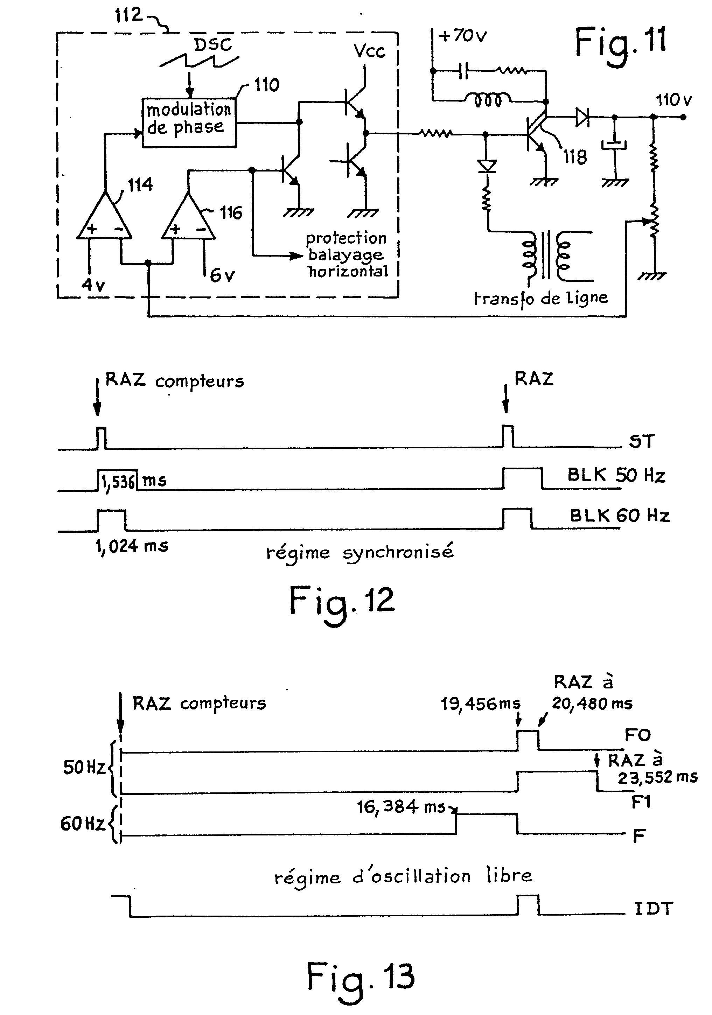

La figure 10 représente un sous-ensemble de circuits 90 qui correspond à la partie de commande de balayage de trame, établissant des créneaux de commande d'un élément de commutation extérieur au circuit intégré assurant le balayage vertical.

Le circuit de balayage vertical comprend la bobine de déviation verticale 18 qui est en série avec une capacité 92 et une résistance de mesure de courant 94. Cet ensemble est en parallèle sur une capacité 96. Les éléments 18, 92, 94 et 96 sont alimentés par un enroulement secondaire 34 du transformateur de ligne, en série avec une inductance 98 et un thyristor 100. Le transformateur de ligne fournit un courant impulsionnel à la fréquence de ligne (impulsions correspondant aux retours de ligne). Le thyristor est commandé par des créneaux de sortie du sous-ensemble 90, à la fréquence de ligne également. Pour plus de précision sur la constitution de ce circuit de balayage vertical, on peut se référer au brevet français 79/14 590 du 7 juin 1979 au nom de Thomson-Brandt (invention de G. Rilly). On cherche à produire un courant variant linéairement dans la bobine 18, et pour cela on compare le courant mesuré dans la résistance 94 à une rampe très linéaire ayant la période voulue pour le balayage vertical (20 ms). La différence entre la rampe linéaire, engendrée par un générateur 102 commandé par le circuit logique de trame 60' mentionné en référence à la figure 4, et le courant dans la bobine de déviation verticale 18, est détectée et transmise, par l'intermédiaire d'un amplificateur différentiel 104 à un modulateur de phase 106. La tension issue de l'amplificateur 104 est comparée, dans le modulateur de phase 106, à la tension en dents de scie DSC à la fréquence de ligne, pour établir des créneaux de rapport cyclique variable à la fréquence de ligne. Le thyristor est commandé selon ce rapport cyclique et définit un courant moyen dans le déviateur vertical, ce courant moyen croissant en fonction du rapport cyclique imposé par l'asservissement.

Une caractéristique de l'invention est donc que l'on utilise la dent de scie produite de manière logique à la fréquence ligne pour moduler le rapport cyclique de créneaux à la fréquence ligne servant à commander le courant à la fréquence trame dans le déviateur vertical. Seule une dent de scie se terminant à peu près au début du retour ligne convient pour obtenir une plage de modulation suffisante. Il ne faut pas oublier en effet que le thyristor est alimenté directement par le transformateur de ligne. La dent de scie produite par le générateur 70 convient et il n'y a pas besoin d'une autre capacité, donc d'une autre borne de circuit intégré pour le circuit de balayage trame.

La figure 11 représente le schéma simplifié de l'alimentation stabilisée à découpage qui établit les différentes tensions nécessaires aux circuits de balayage.

Toujours selon la présente invention, on utilise la même dent de scie DSC et un autre modulateur de phase 110 pour établir des créneaux de rapport cyclique variable destinés à la régulation de tension de cette alimentation stabilisée. Ici encore, on définit un sous-ensemble intégrable 112 commandant le circuit de puissance de l'alimentation stabilisée. Ce sous-ensemble est intégré sur la même puce que les sous-ensembles 36 et 90. Le modulateur de phase 110 reçoit, d'une part, une tension issue d'un amplificateur différentiel 114 qui fournit un signal représentant la différence entre une fraction de la tension de sortie de l'alimentation stabilisée et une tension de référence (par exemple 4 volts), et, d'autre part, le signal en dent de scie DSC à la fréquence de ligne. Les créneaux de sortie du modulateur de phase sont donc à rapport cyclique variable en fonction de la tension de sortie de l'alimentation. Comme ces créneaux sont appliqués à un transistor de puissance 118 qui attaque un circuit oscillant LC, le rapport cyclique des créneaux ainsi établis agit directement sur la tension de sortie de l'alimentation, de sorte qu'il y a régulation selon le principe connu des alimentations à découpage.

La coïncidence entre la remise à zéro de la dent de scie et le retour ligne est telle qu'elle permettra de bloquer le transistor de puissance pendant le retour ligne. Le transformateur ligne fournira à la base le courant nécessaire pour évacuer les charges stockées dans le collecteur. Pendant la durée du balayage une diode en série avec le secondaire du transformateur isolera la base de celui-ci pour que seul le circuit intégré puisse commander la durée de conduction. Là encore, le choix fait pour la forme de la dent de scie s'avère particulièrement favorable.

Sur la figure 11, on a également représenté une protection, sous forme d'un comparateur 116, qui compare une fraction de la tension régulée à une tension de référence supérieure à la tension normale et qui arrête l'alimentation stabilisée ainsi que le balayage horizontal (par l'intermédiaire de l'étage de sortie 78 de la figure 4) lorsque la sortie de l'alimentation régulée dépasse une valeur maximum autorisée.

Les schémas électriques des figures 10 et 11 ne sont donnés qu'à titre indicatif pour montrer comment on tire parti, pour le balayage de trame et pour l'alimentation stabilisée, du signal en dent de scie engendré à partir du circuit logique 60 et servant déjà à deux usages dans le circuit de balayage horizontal.

On va maintenant préciser les caractéristiques particulières de l'invention relativement au circuit logique de trame 60' qui, de même que la partie de circuit logique 60 concernant le balayage de ligne, ne sera décrit que par référence aux formes des signaux logiques produits et à leurs conditions de production, étant entendu qu'il est évident pour l'homme de l'art de réaliser les fonctions logiques au moyen de portes une fois qu'on indiqué quels étaient les signaux de sortie à obtenir et les signaux d'entrée utilisés.

Les figures 12 et 13 représentent les signaux les plus importants produits par le circuit logique de trame 60'.

Le circuit 60' reçoit d'une part une fréquence de base qui est la fréquence FD, double de la fréquence de ligne et synchronisée sur le signal vidéo puisqu'elle est issue des diviseurs 58 de la figure 4, et d'autre part le signal de synchro/trame ST.

Tout d'abord, le circuit 60' comprend un ensemble de diviseurs de fréquence qui sont des compteurs binaires, produisant des sous-multiples binaires de la fréquence FD jusqu'à une fréquence inférieure ou égale à la fréquence de trame (20 ms). En outre, le circuit 60' comprend un ensemble de portes logiques établissant les signaux désirés.

En présence d'un signal de synchro/trame ST, tous ces compteurs sont remis à zéro par l'apparition de ce signal ST.

Sinon, ils sont remis à zéro automatiquement au bout d'une durée fixe déterminée qui est par exemple de 23,5 millisecondes environ si aucun signal vidéo n'est reconnu présent par le circuit 68 (figure 4) et de 20,5 millisecondes si un signal vidéo est reconnu présent et synchronisé. Cette durée peut encore être rendue différente en fonction d'un commutateur indiquant qu'on est en standard américain (60 Hz) ou européen (50 Hz). Ces durées différentes sont établies par des combinaisons logiques des signaux de sortie des différents compteurs (en pratique par combinaison des 5 ou 6 sorties de poids supérieur étant donné qu'il n'y a pas besoin d'une résolution très poussée pour la précision de ces signaux de remise à zéro).

On voit donc que deux régimes de fonctionnement du circuit 60' peuvent exister: un régime synchronisé et un régime d'oscillation libre avec recherche de synchronisation.

La figure 12 représente les signaux émis en régime synchronisé: l'apparition d'un créneau de synchro/trame remet à zéro tous les compteurs qui recommencent à compter dès la première impulsion suivante de la fréquence FD.

On notera à ce propos qu'en même temps le générateur de rampe de trame 102 (figure 10) est remis à zéro par décharge brutale d'un condensateur, cette décharge durant moins de 10 microsecondes; la rampe recommence immédiatement à s'établir de sorte qu'on ne perd même pas une période de la fréquence FD (32 microsecondes) dans le cycle de comptage.

A partir du début du comptage, on établit un créneau de suppression de trame BLK à l'aide duquel on efface le spot pendant le retour du spot en début de trame. Ce créneau doit être précis pour que d'une part on ne perde pas une partie de l'image et que d'autre part on ne voie pas le retour du spot. Sa durée est établie par combinaison des sorties des compteurs à 1,280 ou 1,536 millisecondes (20 ou 24 lignes de 64 microsecondes) en 50 Hz, et peut être commutée à 1,024 millisecondes en 60 Hz pour un récepteur bistandard. Ce créneau coïncide avec la suppression de la transmission d'informations vidéo (tout au moins d'informations correspondant à l'image transmise).

Le circuit 60' établit encore, toujours par comptage, des fenêtres de synchronisation servant à délimiter des intervalles de temps limités pendant lesquels on autorise l'arrivée de la synchro/trame. Cela signifie que la synchro/trame ne peut remettre à zéro les compteurs et le générateur de rampe que si elle arrive dans ces fenêtre temporelles.

Ces fenêtres sont établies par le circuit logique 60' et utilisée par lui pour autoriser ou interdire cette remise à zéro. Elles sont indiquées à la figure 13 et ont aussi pour rôle, notamment lors de la perte ou l'absence de synchronisation trame, de remettre à zéro les compteurs si, au bout d'un temps anormalement supérieur à la période de trame, la synchro/trame n'est pas apparue pour faire cette remise à zéro.

A partir d'une remise à zéro des compteurs, qu'elle provienne d'une synchro/trame ou d'une remise à zéro forcée par une fenêtre de synchronisation, on compte une durée fixe (établie par combinaison logique des sorties des compteurs) pendant laquelle on n'autorise pas la remise à zéro par la synchro trame.

Cette durée peut être de 19, 456 millisecondes en standard européen. Elle peut être de 16,384 ms en standard américain, un commutateur pouvant être prévu pour passer de l'un à l'autre. De toute façon, elle se termine légèrement avant l'instant théorique où on attend une nouvelle synchro/trame.

A la fin de cette durée, on engendre une fenêtre de synchronisation F0 si un signal vidéo est reconnu présent et F1 dans le cas contraire. F0 est choisi beaucoup plus court que F1; par exemple, la durée de F0 est de 1,024 milliseconde. Cette durée courte insensibilise mieux aux bruits susceptibles d'apparaître dans le signal de synchro/trame.

Si au contraire, un signal vidéo n'est pas reconnu présent, le circuit 60' engendre une autre fenêtre F1, plus longue, donc plus sensible au bruit mais permettant une capture plus rapide de la synchronisation lorsqu'elle apparaîtra: par exemple, F1 dure 4,096 millisecondes.

Le circuit reçoit donc le signal de reconnaissance vidéo RV pour effectuer ce choix.

En standard 60 Hz, la fenêtre F peut durer 3,072 ms.

C'est la fin de la fenêtre qui remet à zéro les compteurs et la rampe de trame en cas de non-réception de synchro/trame. Le système oscille alors à sa fréquence propre (déterminée par la fin de la fenêtre de synchronisation) jusqu'à ce qu'il reçoive à nouveau un créneau de synchro/trame.

On a indiqué que le générateur de rampe linéaire était remis à zéro immédiatement à la réception de la synchro/trame. On peut prévoir qu'il en va autrement, mais, de toute façon, cette remise à zéro doit être effectuée avec un déphasage fixe par rapport à la synchro/trame.

Pour terminer la description du circuit logique de trame 60', on peut encore dire qu'il engendre le signal d'inhibition IDT mentionné en référence à la figure 4, ce signal est un créneau qui n'apparaît d'ailleurs que si le signal de reconnaissance vidéo indique la synchronisation du circuit sur un signal vidéo; il est engendré à partir des compteurs et débute avant l'instant d'apparition théorique de la synchro/trame (par exemple au bout de 19,804 ms); il se termine après (par exemple après une durée de 288 microsecondes).

Comme pour le balayage ligne, l'intérêt de la production logique de tous ces signaux (et notamment pour le signal BLK qui commande la suppression de spot en fin de trame), est d'obtenir une grande précision dans les durées définies.

## Revendications

1. Circuit électronique destiné à assurer la commande des circuits de balayage du spot lumineux d'un écran de télévision en synchronisme avec un signal vidéo (SV) reçu, ainsi que l'établissement de différents signaux liés à ce balayage, ce circuit recevant le signal vidéo (SV) et une impulsion (RL) indiquant le retour du spot lumineux en début de ligne, et fournissant notamment un signal (CC) en créneaux à la fréquence de balayage de ligne et de phase variable, pour commander un interrupteur (22) d'attaque d'une bobine (12) de déviation horizontale du spot, ce circuit comprenant:

— un oscillateur (52) à fréquence contrôlée, de fréquence très supérieure à la fréquence de ligne et multiple de cette fréquence,
— des diviseurs de fréquence (58) établissant des signaux logiques de fréquences sous-multiples de celles de l'oscillateur, dont notamment au signal de base constitué par un créneau périodique à la fréquence de ligne (FLA),
— un circuit logique (60) recevant les signaux aux différentes fréquences et produisant divers signaux logiques à la fréquence de ligne, ces signaux ayant des durées et des phases parfaitement définies par rapport au signal de base,

— un générateur de signal en dent de scie (70) recevant l'un des signaux (EF) issus du circuit logique et établissant à partir de ce signal une dent de scie périodique (DSC) à la fréquence de ligne et parfaitement fixe en phase par rapport au signal de base,
— un séparateur de synchro (50) pour isoler du signal vidéo reçu des signaux de synchro/ligne et de synchro/trame,
— un premier détecteur de coïncidence de phase (62) recevant le signal de synchro/ligne et le signal de base, et pilotant l'oscillateur contrôlé de manière à caler une transition d'origine de ce signal de base sur le signal de synchro/ligne,
— un deuxième détecteur de coïncidence (72) recevant l'impulsion de retour de ligne (RL) et un signal logique à la fréquence de ligne (FLB), et fournissant une tension fonction d'un écart de phase entre les deux signaux qu'il reçoit,

caractérisé en ce que le générateur (70) de signal en dent de scie (DSC) établit une rampe se terminant très légèrement avant ladite transition d'origine du signal de base calée sur le signal de synchro/ligne, et en ce qu'il est prévu en outre un comparateur (74) recevant d'une part la sortie du deuxième détecteur (72) et d'autre part la sortie du générateur de signal en dent de scie, et fournissant des créneaux à la fréquence de ligne, débutant à une position variable en fonction de la tension de sortie du deuxième détecteur, pour commander la circulation d'un courant dans la bobine de déviation horizontale à un instant tel que l'impulsion périodique de retour de ligne qui en résulte se cale par rapport au signal logique reçu par le deuxième détecteur.

2. Circuit électronique selon la revendication 1 caractérisé par le fait que le générateur de dent de scie reçoit du circuit logique un créneau centré sensiblement autour du début du signal de base et d'une durée de l'ordre de la durée de l'impulsion de retour de ligne, que ce créneau remet à zéro le signal de sortie du générateur, et qu'en dehors du créneau le signal de sortie croît linéairement.

3. Circuit électronique selon la revendication 2 caractérisé par le fait que le générateur de dent de scie comprend une source de courant constant en série avec une capacité et un transistor en parallèle sur la capacité, le créneau de remise à zéro de la dent de scie étant appliqué à la base du transistor.

4. Circuit électronique selon la revendication 3 caractérisé par le fait que le créneau de remise à zéro de la dent de scie débute environ 4 microsecondes avant la transition d'origine du signal de base et dure 10 microsecondes environ.

5. Circuit électronique selon l'une des revendications 1 à 3 caractérisé par le fait que le premier détecteur de coïncidence est agencé pour centrer l'origine du signal de base sur le centre du signal de synchro/ligne et que, pour moduler la phase des créneaux de sortie du comparateur de manière à centrer l'impulsion de retour de ligne sur un intervalle de suppression prévu dans le signal vidéo à chaque période de ligne, le deuxième détecteur de coïncidence reçoit du circuit logique un signal qui correspond au signal de base retardé d'environ 2 microsecondes.

6. Circuit électronique selon l'une des revendications 1 à 5 caractérisé par le fait que les créneaux de sortie du comparateur (74) sont appliqués à une entrée de basculement d'une bascule (86) qui comporte aussi une entrée de remise à l'état initial commandée par un deuxième comparateur (88) recevant la dent de scie et fournissant un signal de remise à l'état initial lorsque la tension en dent de scie franchit un niveau de tension différant d'une valeur fixe de la tension de sortie du deuxième détecteur de coïncidence.

7. Circuit électronique selon la revendication 6 caractérisé par le fait que le générateur de dent de scie comprend une capacité susceptible d'être chargée par une source de courant constant, et par le fait que la tension de sortie du deuxième détecteur de coïncidence est amenée à travers un adaptateur d'impédance (84), à un ensemble en série d'une résistance (80) et d'une source de courant (82) de valeur égale ou proportionnele à celle du générateur de dent de scie, la tension aux bornes de cette source de courant étant amenée à une entrée du deuxième comparateur.

8. Circuit électronique selon la revendication 6 caractérisé par le fait que la différence entre la tension de sortie du deuxième détecteur de coïncidence et une tension fixe, correspondant sensiblement au milieu de l'excursion du signal en dent de scie, est appliquée aux bornes d'une résistance, et que le courant dans cette résistance est recopié pour produire une chute de tension égale à cette différence de tension dans une autre résistance dont une borne est reliée à une autre tension fixe qui correspond sensiblement au niveau inférieur du signal en dent de scie, l'autre borne de la résistance étant reliée à une entrée du deuxième comparateur.

9. Circuit électronique selon l'une des revendications 1 à 8 caractérisé par le fait que le circuit logique fournit un signal d'échantillonnage à la fréquence de balayage de ligne, constitué par un créneau plus court que le créneau de synchronisation de ligne du signal vidéo, et dont la phase est définie par rapport à celle du signal de base de telle manière que ce créneau d'échantillonnage se situe dans un créneau de synchro/ligne lorsque ce dernier est calé à la position désirée par le premier détecteur de coïncidence, et par le fait qu'il est prévu une porte logique et une capacité pour intégrer le créneau résultant de la coïncidence de ces deux créneaux et pour ne fournir une tension continue de reconnaissance de signal vidéo que lorsqu'il y a coïncidence des créneaux au cours des périodes successives de balayage de ligne.

10. Circuit électronique selon la revendication 9 caractérisé par le fait que le circuit logique fournit un signal en créneau de durée supérieure au signal de synchronisation de ligne, sensiblement centré autour de l'origine du signal de base, et une porte logique recevant ce créneau et la tension continue de roconnaissance de signal vidéo, la sortie de la porte servant à inhiber le premier détecteur de coïncidence pendant ce créneau si un signal vidéo est reconnu présent.

11. Circuit électronique selon l'une des revendications 1 à 10 caractérisé par le fait que le circuit logique fournit un signal d'échantillonnage à la fréquence de balayage de ligne, constitué par un créneau de durée sensiblement égale à 4 microsecondes, postérieur d'une durée fixe d'environ 2 microsecondes à l'origine du signal de base.

12. Circuit selon l'une des revendications 1 à 11 caractérisé par le fait que le circuit logique comprend en outre:

— un ensemble de compteurs binaires diviseurs de fréquence recevant une fréquence double de la fréquence du signal de base et produisant des fréquences sous-multiples de la fréquence reçue;
— un ensemble de portes logiques recevant ces diverses fréquences et recevant également le signal de synchronisation de trame, cet ensemble établissant au moins un signal de remise à zéro de tous les compteurs à l'origine du signal de synchronisation de trame, et un créneau d'effacement de trame commençant à la remise à zéro et ayant une durée fixe correspondant à la durée théorique de suppression du signal vidéo à chaque trame,

et par le fait qu'il est prévu un générateur de dent de scie de trame commandé avec une phase fixe par rapport à la remise à zéro des compteurs-diviseurs.

13. Circuit électronique selon la revendication 12 caractérisé par le fait que l'ensemble de portes logiques produit une fenêtre de synchronisation qui commence légèrement avant l'instant théorique où doit arriver le signal de synchro/trame et qui se termine légèrement après, la fin de cette fenêtre établissant la remise à zéro des compteurs si elle n'a pas été effectuée par la synchro/trame.

14. Circuit électronique selon la revendication 13 caractérisé par le fait que l'ensemble de portes logiques reçoit un signal de reconnaissance vidéo indiquant qu'un signal vidéo est reçu et synchronisé, et par le fait qu'en l'absence de ce signal, la fenêtre de synchronisation a une durée supérieure à celle qu'elle a en présence du signal de reconnaissance.

15. Cicuit électronique selon la revendication 14 caractérisé par le fait que l'ensemble de portes logiques établit un créneau d'inhibition du premier détecteur de coïncidence, à la période théorique de trame, ce créneau débutant l'instant d'apparition théorique du signal de synchro/ trame et se terminant après, ce créneau étant toutefois supprimé en l'absence du signal de reconnaissance vidéo.

16. Circuit électronique selon l'une des revendications 12 à 15 caractérisé par le fait que le signal en dent de scie de trame sert de régérence à laquelle est comparée le courant dans une bobine de déviation verticale, et qu'il est prévu un circuit de modulation de courant dans cette bobine, recevant le résultat de la comparaison et le signal en dent de scie à la fréquence de ligne pour effectuer une modulation de courant par échantillonnage à rapport cyclique variable à la fréquence de ligne.

17. Circuit électronique selon l'une des revendications 1 à 16 caractérisé par le fait que le signal en dent de scie à la fréquence de balayage de ligne est amené à l'entrée d'un comparateur dont l'autre entrée reçoit une tension de correction, pour établir des créneaux de rapport cyclique variable destinés à la commande d'une alimentation stabilisée à découpage.

18. Circuit selon l'une des revendications 1 à 17 caractérisé par le fait qu'il est intégré sur une puce, à l'exception des éléments non facilement intégrables tels que les capacités et résistances de précision ou résistances ajustables, cette puce comprenant trois sous-ensembles produisant chacun des créneaux à la fréquence de balayage de ligne, ces sous-ensembles étant destinés respectivement à la commande des étages de puissance des circuits de balayage de ligne et de trame et d'une alimentation stabilisée à découpage, ces trois sous-ensembles utilisant un signal en dent de scie commun à la fréquence de ligne.

19. Circuit électronique selon la revendication 18 caractérisé par le fait que le circuit est intégré selon une technologie bipolaire linéaire, les parties fonctionnant en commutation étant réalisées par des opérateurs logiques à injection.

**Patentansprüche**

1. Elektronischer Kreis zur Steuerung der Ablenkung für den Leuchtfleck eines Fernsehschirms synchron mit einem empfangenen Bildsignal (SV) sowie zur Bildung verschiedener mit dieser Ablenkung verbundener Signale, wobei der Kreis das Bildsignal (SV) und einen Impuls (RL) empfängt, der den Rücksprung des Lichtpunkts an den Zeilenanfang anzeigt, und insbesondere ein Rechtecksignal (CC) mit der Zeilenabtastfrequenz und mit variabler Phase liefert, um einen Ansteuerschalter (22) für die Horizontalablenkspule (12) des Leuchtflecks zu steuern, und wobei der Kreis enthält:

— einen Oszillator (52) mit kontrollierter Frequenz, wobei die Frequenz wesentlich höher als die Zeilenfrequenz und ein Vielfaches dieser Frequenz ist,
— Frequenzteiler (58), die logische Signale mit Frequenzen erzeugen, die ein Untervielfaches der Oszillatorfrequenz sind, insbesondere ein Basissignal, das aus einem periodischen Rechteckimpuls mit der Zeilenfrequenz (FLA) gebildet wird,
— einen logischen Kreis (60), der die Signale mit dem verschiedenen Frequenzen empfängt und verschiedene logische Signale mit der Zeilenfrequenz liefert, deren Signaldauer und Phasenlage genau bezüglich des Basissignals definiert sind,
— einen Sägezahngenerator (70), der eines der Ausgangssignale (EF) des logischen Kreises zugeführt erhält und ausgehend von diesem Signal ein periodisches Sägezahnsignal (DSC) mit der Zeilenfrequenz liefert, das phasenmäßig bezüglich des Basissignals genau festgelegt ist,
— einen Synchro-Separator (50), um aus dem empfangenen Bildsignal die Zeilensynchron- und die Bildsynchronsignale abzutrennen,
— einen ersten Phasenkoinzidenzdetektor (62), dem das Zeilensynchronsignal und das Basissignal zugeführt werden und der den frequenzkontrollierten Oszillator so steuert, daß ein Ursprungsübergang dieses Basissignals auf das Zeilensynchronsignal getriggert wird,
— einen zweiten Koinzidenzdetektor (72), dem der Zeilenrücksprungimpuls (RL)) und ein logisches Signal mit der Zeilenfrequenz (FLB) zugeführt werden und der eine Spannung liefert, die vom Phasenabstand zwischen den beiden Eingangssignalen abhängt,

dadurch gekennzeichnet, daß der Generator (70) des Sägezahnsignals (DSC) eine Rampe erzeugt, die knapp vor dem Ursprungsübergang des Basissignals endet, der mit dem Zeilensynchronsignal getriggert ist, und daß außerdem ein Komparator (74) vorgesehen ist, der einerseits mit dem Ausgang des zweiten Detektors (72) und andererseits mit dem Ausgang des Sägezahngenerators verbunden ist und Rechteckimpulse mit der Zeilenfrequenz liefert, die in einer variablen Zeitlage abhängig von der Ausgangsspannung des zweiten Detektors beginnen, um das Fließen eines Stroms in der Horizontalablenkspule zu einem solchen Zeitpunkt zu bewirken, daß der sich dabei ergebende periodische Zeilenrücksprungimpuls sich auf das vom zweiten Detektor empfangene logische Signal triggert.

2. Elektronischer Kreis nach Anspruch 1, dadurch gekennzeichnet, daß der Sägezahngenerator des logischen Kreises einen Rechteckimpuls empfängt, der im wesentlichen auf den Anfang des Basissignals zentriert ist und dessen Breite in der Größenordnung der Impulsbreite des Zeilenrücksprungsignals liegt, daß dieses Rechtecksignal das Ausgangssignal des Sägezahngenerators auf Null setzt un daß im übrigen dieses Ausgangssignal linear ansteigt.

3. Elektronischer Kreis nach Anspruch 2, dadurch gekennzeichnet, daß der Sägezahngenerator eine Quelle konstanten Stroms in Reihe mit einem Kondensator aufweist, dem ein Transistor parallelgeschaltet ist, und daß der Rechteckimpuls für die Nullsetzung des Sägezahns an die Basis dieses Transistors angelegt wird.

4. Elektronischer Kreis nach Anspruch 3, dadurch gekennzeichnet, daß der Rechteckimpuls für die Nullsetzung des Sägezahns ungefähr 4 Mikrosekunden vor dem Ursprungsübergang des Basissignals beginnt und etwa 10 Mikrosekunden andauert.

5. Elektronischer Kreis nach einem der Ansprüche 1 bis 3, dadurch gekennzeichnet, daß der erste Koinzidenzdetektor so gestaltet ist, daß er den Anfang des Basissignals auf die Mitte des Zeilensynchronsignals zentriert, und daß zur Phasenmodulation der Ausgangsrechteckimpulse des Komparators im Sinne einer Zentrierung des Zeilenrücksprungimpulses über ein Unterdrückungsintervall, das im Bildsignal für jede Zeilenperiode vorgesehen ist, der zweite Koinzidenzdetektor vom logischen Kreis ein Signal empfängt, das dem Basissignal entspricht und diesem gegenüber um etwa 2 Mikrosekunden verzögert ist.

6. Elektronischer Kreis nach einem der Ansprüche 1 bis 5, dadurch gekennzeichnet, daß die Ausgangsrechteckimpulse des Komparators (74) an einen Kippeingang einer Kippstufe (86) angelegt sind, die außerdem einen von einem zweiten Komparator (88) gesteuerten Rücksetzungseingang aufweist, wobei dieser Komparator den Sägezahn empfängt und ein Rücksetzungssignal liefert, wenn die Sägezahnspannung ein Spannungsniveau überschreitet, das sich um einen Festwert von der Ausgangsspannung des zweiten Koinzidenzdetektors unterscheidet.

7. Elektronischer Kreis nach Anspruch 6, dadurch gekennzeichnet, daß der Sägezahngenerator einen Kondensator aufweist, der von einer Quelle konstanten Stroms aufgeladen werden kann, und daß die Ausgangsspannung des zweiten Koinzidenzdetektors über einen Impedanzanpasser (84) an die Serienschaltung eines Widerstands (80) und einer Stromquelle (82) angelegt wird, deren Wert gleich oder proportional dem Wert des Sägezahngenerators ist, und daß die Spannung an den Klemmen dieser Stromquelle an einen Eingang des zweiten Komparators gelangt.

8. Elektronischer Kreis nach Anspruch 6, dadurch gekennzeichnet, daß die Differenz zwischen der Ausgangsspannung des zweiten Koinzidenzdetektors und einer Festspannung, die im wesentlichen dem Mittelwert des Spannungsbereichs des Sägezahngenerators entspricht, an die Klemmen eines Widerstands angelegt wird, und daß der Strom in diesem Widerstand in einen dieser Spannungsdifferenz gleichen Spannungsabfall in einem weiteren Widerstand umgesetzt wird, dessen eine Klemme an einer anderen Festspannung, die im wesentlichen dem unteren Niveau des Sägezahnsignals entspricht, angeschlossen ist, während die andere Klemme des Widerstands an einen Eingang des zweiten Komparators angeschlossen ist.

9. Elektronischer Kreis nach einem der Ansprüche 1 bis 8, dadurch gekennzeichnet, daß der logische Kreis ein Abtastsignal mit der Zeilenablenkfrequenz liefert, das aus einem kürzeren Rechteckimpuls als der Zeilensynchronisationsimpuls des Bildsignals gebildet wird und dessen Phase bezüglich der Phase des Basissignals so definiert ist, daß dieser Abtastimpuls sich innerhalb eines Zeilensynchronimpulses befindet, wenn letzterer auf die gewünschte Zeitlage durch den ersten Koinzidenzdetektor getriggert ist, und daß ein logisches Tor und ein Kondensator vorgesehen sind, um den aus der Koinzidenz dieser beiden Impulse resultierenden Impuls zu integrieren und eine Gleichspannung für die Erkennung des Bildsignals nur dann zu liefern, wenn Koinzidenz zwischen den Impulsen während der aufeinanderfolgenden Zeilenablenkperioden besteht.

10. Elektronischer Kreis nach Anspruch 9, dadurch gekennzeichnet, daß der logische Kreis ein Rechtecksignal einer Dauer liefert, die größer als die des Zeilensynchronisationssignals ist, wobei dieses Signal im wesentlichen um den Anfang des Basissignals zentriert ist, wobei ein logisches Tor diesen Impuls und die Erkennungsgleichspannung des Bildsignals zugeführt erhält und der Ausgang des Tores dazu dient, den ersten Koinzidenzdetektor während dieses Impulses zu sperren, wenn ein Bildsignal als solches erkannt worden ist.

11. Elektronischer Kreis nach einem der Ansprüche 1 bis 10, dadurch gekennzeichnet, daß der logische Kreis ein Abtastsignal mit der Zeilenablenkfrequenz liefert, das aus einem Rechteckimpuls besteht, der im wesentlichen 4 Mikrosekunden lang andauert und um eine Zeitspanne von etwa 2 Mikrosekunden bezüglich Anfangs des Basissignals später beginnt.

12. Kreis nach einem der Ansprüche 1 bis 11, dadurch gekennzeichnet, daß der logische Kreis außerdem

— eine Gruppe von als Frequenzteiler wirksamen Binärzählern, die eine gegenüber der Frequenz des Basissignals doppelt so hohe Frequenz zugeführt erhält und Untervielfache der empfangenen Frequenz liefert,
— eine Gruppe von logischen Toren aufweist, die die verschiedenen Frequenzen sowie ebenfalls das Bildsynchronisationssignal zugeführt erhält und mindestens ein Nullsetzungssignal für alle Zähler am Anfang des Bildsynchronisationssignals erzeugt sowie einen Bildlöschimpuls liefert, der bei der Nullsetzung beginnt und eine feste Impulsbreite entsprechend der theoretischen Dauer der Unterdrückung des Bildsignals bei jedem Bildwechsel besitzt,

und daß ein Sägezahngenerator mit der Bildfrequenz vorgesehen ist, der mit einer festen Phase bezüglich der Nullsetzung der Zähler-Teiler gesteuert wird.

13. Elektronischer Kreis nach Anspruch 12, da-

durch gekennzeichnet, daß die Gruppe von logischen Toren ein Synchronisationsfenster erzeugt, das geringfügig vor dem theoretischen Zeitpunkt, an dem das Bildsynchronsignal ankommen soll, beginnt und geringfügig danach endet, wobei das Ende dieses Fensters die Nullsetzung der Zähler bewirkt, sofern diese nicht durch die Bildsynchronisation bewirkt worden war.

14. Elektronischer Kreis nach Anspruch 13, dadurch gekennzeichnet, daß die Gruppe von logischen Toren ein Bilderkennungssignal empfängt, das angibt, ob ein Bildsignal empfangen und synchronisiert wurde, und daß das Synchronisationsfenster in Abwesenheit dieses Signals eine Breite besitzt, die größer ist, als wenn das Erkennungssignal vorhanden ist.

15. Elektronischer Kreis nach Anspruch 14, dadurch gekennzeichnet, daß die Gruppe von logischen Toren einen Sperrimpuls für den ersten Koinzidenzdetektor mit der theoretischen Bildperiode erzeugt, wobei dieser Impuls vor dem Zeitpunkt des theoretischen Auftretens des Bildsynchronsignals beginnt und danach endet und wobei dieser Impuls jedoch unterdrückt wird, falls das Bilderkennungssignal nicht vorhanden ist.

16. Elektronischer Kreis nach einem der Ansprüche 12 bis 15, dadurch gekennzeichnet, daß das Bild-Sägezahnsignal als Bezugsgröße dient, mit der der Strom in der Vertikalablenkspule verglichen wird, und daß ein Kreis zur Modulation des Stroms in dieser Spule vorgesehen ist, der das Vergleichsergebnis sowie das Sägezahnsignal mit der Zeilenfrequenz zugeführt erhält, um eine Modulation des Stroms durch Tastung mit zyklischem variablem Verhältnis mit der Zeilenfrequenz durchzuführen.

17. Elektronischer Kreis nach einem der Ansprüche 1 bis 16, dadurch gekennzeichnet, daß das Sägezahnsignal mit der Zeilenablenkfrequenz an den Eingang eines Komparators gelangt, dessen anderer Eingang eine Korrekturspannung zugeführt erhält, um Impulse mit zyklischem variablem Impulsverhältnis zu erzeugen, die zur Steuerung einer stabilisierten Stromversorgung mit Austastung bestimmt sind.

18. Kreis nach einem der Ansprüche 1 bis 17, dadurch gekennzeichnet, daß er auf einem Baustein integriert ist mit Ausnahme der nicht leicht integrierbaren Elemente wie Kondensatoren und Präzisionswiderstände oder Justierwiderstände, wobei dieser Baustein drei Untergruppen umfaßt, die je Rechteckimpulse mit der Zeilenablenkfrequenz erzeugen und je zur Steuerung der Leistungsstufen der Zeilen- bzw. Bildabtastkreise sowie einer stabilisierten Stromversorgung mit Austastung bestimmt sind, und daß dieser drei Untergruppen ein gemeinsames Sägezahnsignal der Zeilenfrequenz verwenden.

19. Elektronischer Kreis nach Anspruch 18, dadurch gekennzeichnet, daß der Kreis gemäß einer linearen bipolaren Technologie integriert ist und die als Schalter wirkenden Teile als logische Operatoren nach dem Injektionsprinzip aufgebaut sind.

## Claims

1. An electronic circuit conceived to ensure the control of the scanning circuit of the luminous spot on a TV-screen in accordance with a received video signal (SV), and to ensure the establishment of several signals related to the scanning, this circuit receiving the video signal (SV) and a pulse (RL) indication the flyback of the luminous spot to the start of a line and furnishing particulary a square signal (CC) at the line scan frequency and at a variable phase in order to control a switch (22) for attacking a horizontal spot deflection coil (12), this circuit comprising
- an oscillator (52) with adjustable frequency, this frequency being very much higher than the line frequency and being a multiple of said frequency,
- frequency dividers (58) establishing logic signals of frequencies which are submultiples of the oscillator frequency, especially a base signal which is constituted by a periodical square signal at the line frequency (FLA),
- a logic circuit (60) receiving these signals of different frequencies and producing several logic signals at the line frequency, the durations and phases of these signals being perfectly defined with respect to the basic signal,
- a saw-tooth signal generator (70) receiving one of the signals (EF) coming from the logic circuit, and elaborating from this signal a periodic saw-tooth (DSC) at the line frequency and perfectly phase-locked with respect to the basic signal,
- a synchro-separator (50) for separating the line synchro and frame synchro signals from the video signals,
- a first phase coincidence detector (62) receiving the line synchro signal and the basic signal and controlling the adjustable oscillator as to lock an original transition of this basic signal to the line synchro signal,
- and a second coincidence detector (72) receiving the line flyback pulse (RL) and a logic signal at the line frequency (FLB) and furnishing a voltage which is function of the phase difference between the two incoming signals,
characterized in that the saw-tooth signal (DSC) generator (70) creates a ramp which ends slightly before said original transition of the basic signal synchronized to the line synchro signal, and that ist further includes a comparator (74) which receives on the one hand the output of the second detector (72) and on the other hand the output of the saw-tooth signal generator and which delivers square pulses at the line frequency starting at a variable instant with respect to the output voltage of the second detector, in order to control the current flow in the horizontal deflection coil at such an instant that the periodical line flyback pulse which results therefrom is synchronized with respect to the logic signal coming from the second detector.

2. An electronic circuit according to claim 1, characterized in that the saw-tooth generator receives from the logic circuit a square pulse which is substantially centered around the start of the basic signal and the duration of which is in the order of the duration of the line flyback pulse, that this square pulse brings the output signal of the generator back to zero, and that, in the absence of this square pulse, the output signal increases linearily.

3. An electronic circuit according to claim 2, characterized in that the saw-tooth generator comprises a source of constant current in series with a capacitor to which a transistor is branched in parallel, the square pulse which brings the saw tooth back to zero being applied to the base of the transistor.

4. An electronic circuit according to claim 3, characterized in that the square pulse for bringing the saw tooth back to zero begins about 4 microseconds prior to the original transition of the basic signal and lasts about 10 microseconds.

5. An electronic circuit according to one of the claims 1 to 3, characterized in that the first coincidence detector is arranged for centering the original transition of the basic signal on the center of the line synchro signal, and that the second coincidence detector receives from the logic circuit a signal corresponding to the basic signal and delayed about 2 microseconds with respect thereto, in order to modulate the phase of the output square pulses of the comparator in such a way that the line flyback pulse in centered on a suppression interval provided in the video signal at each line period.

6. An electronic circuit according to one of the claims 1 to 5, characterized in that the output square pulses of the comparator (74) are applied to a switch-over input of a flip-flop (86) which further comprises a return-to-zero input controlled by a second comparator (88), this comparator receiving the saw-tooth and furnishing a return-to-zero signal when the saw-tooth voltage exceeds a voltage level differing by a constant value from the output voltage of the second coincidence detector.

7. An electronic circuit according to claim 6, characterized in that the saw-tooth generator comprises a capacitor which can be charged by a source of constant current, and that the output voltage of the second coincidence detector is applied via an impedance adapter (84) to a series arrangement of a resistor (80) and a current source (82) having a value which is equal or proportional to that of the saw-tooth generator, the voltage at the terminals of this current source being applied to an input of the second comparator.

8. An electronic circuit according to claim 6, characterized in that the difference between the output voltage of the second coincidence detector and a constant voltage corresponding substantially to the mid-point of excursion of the saw-tooth signal is applied to the terminals of a resistor, and that the current in this resistor is copied for generating a voltage drop equal to this voltage difference in a further resistor, one terminal of which is connected to another constant voltage corresponding substantially to the lower level of the saw-tooth signal, the other terminal of this resistor being connected to an input of the second comparator.

9. An electronic circuit according to one of claims 1 to 8, characterized in that the logic circuit furnishes a sampling signal at the line scanning frequency constituted by a smaller square pulse than the line synchronization pulse of the video signal, the phase of this smaller pulse being defined with respect to that of the basic signal in such a way that this sampling signal is situated inside a line synchro square pulse if the latter is locked to the desired position by the first coincidence detector, and that a logic gate and a capacitor are provided in order to integrate the square pulse resulting from the coincidence of these two square pulses and to furnish a direct voltage signifying the identification of the video signal only if the square pulses coincide during the successive line scanning periods.

10. An electronic circuit according to claim 9, characterized in that the logic circuit furnishes a square signal of a longer duration than the line synchronization signal and of a substantially centered position around the original transition of the basic signal, a logic gate receiving this square pulse and the direct voltage which identifies the video signal, the output of this gate being used to inhibit the frist coincidence detector during the presence of this square pulse if the presence of a video signal has been identified.

11. An electronic circuit according to one of claims 1 to 10, characterized in that the logic circuit crates a sampling signal at the line scanning frequency, constituted by a square pulse which lasts substantially for 4 microseconds and which is delayed with respect to the original transition of the basic signal by about 2 microseconds.

12. A circuit according to one of claims 1 to 11, characterized in that the logic circuit further comprises:

— a group of binary counters-frequency dividers receiving a frequency which is twice the frequency of the basic signal, and producing submultiple frequencies with respect to the received frequency,

— a group logic gates receiving these different frequencies and receiving moreover the frame synchronization signal, this group establishing at least a return-to-zero signal for all the counters at the origin of frame synchronization signal, and a frame clear pulse which begins at the return-to-zero instant and which lasts for a constant time corresponding to the theoretic duration of suppression of the video signal in each frame,

— and that a frame saw-tooth generator is provided which is controlled at a constant phase with respect to the zero-setting of the counters-dividers.

13. An electronic circuit according to claim 12, characterized in that the group of logic gates produces a synchronization window which begins slightly prior to the theoretic instant in which the frame synchro signal should arrive, and which terminates slightly afterwards, the end of this window establishing the zero-setting of the counters in case this zero-setting has not been effected by the frame synchro pulse.

14. An electronic circuit according to claim 13, characterized in that the group of logic gates receives a video identification signal indicating that a video signal has been received and synchronized, and that in the absence of this signal, the synchronization window lasts longer than in the case of the presence of the identification signal.

15. An electronic circuit according to claim 14, characterized in that the group of logic gates establishes an inhibition square pulse for the first coincidence detector at the theoretical frame period, this square pulse starting prior to the instant of theoretical appearance of the frame synchro signal and disappearing after this instant, this square pulse however being suppressed in the absence of the video identification signal.

16. An electronic circuit according to one of the claims 12 to 15, characterized in that the frame saw-tooth signal constitutes a reference to which the currents in the vertical deflection coil is compared, and that a circuit for modulating the current in this coil is provided which receives the comparison result and the saw-tooth signal at the line frequency in order to effect a current modulation by sampling at variable cyclic ratio and at the line frequency.

17. An electronic circuit according to one of the claims 1 to 16, characterized in that the saw-tooth signal at the line scanning frequency is applied to the input of a comparator, the other input of which receives a correction voltage in order to establish square pulses of variable cyclic ratio which are used to control a stabilized power supply by cut-out.

18. A circuit according to one of the claims 1 to 17, characterized in that it is integrated on a module except for the elements which cannot easily be integrated, such as capacitors and precision resistors or adjustable resistors, this module comprising three sub-assemblies each producing square pulses at the line scanning frequency, these sub-assemblies being respectively used to command the power stages of the line and frame scanning circuits and of a stabilized power supply with cut-off, these three sub-asemblies using a common saw-tooth signal at the line frequency.

19. An electronic circuit according to claim 18, characterized in that the circuits is integrated according to a linear bipolar technology, the parts which function as switches being realized by injection-type logic operators.

0 064 898

**Fig.1**
- Alimentation stabilisée — 20
- Circuit de balayage horizontal — 10 (période 64 µs)
- Circuit de balayage vertical — 16 (période 20ms)
- 12, 14, 18

**Fig.2**
- THT
- alimentation stabilisée
- retour ligne
- Signal vidéo — circuit de commande balayage horizontal — 36
- ampli — 24
- TL — 34, 32, 22, 30, 28, 12, 26
- déviateur horizontal
- vers balayage vertical
- échantillonnage (pour chrominance)

**Fig.3**
- oscillateur VCO — 42
- signal vidéo — séparateur de synchro — 38
- synchro ligne
- comparateur de phase — 44
- comparateur de phase — 46
- variateur de phase — 48
- 40
- synchro trame
- retour ligne

19

Fig.4

0 064 898

Fig.5

Fig.6

Fig.7

Fig.8

Fig.9

Fig.10

# Fig.11

## Fig.12

RAZ compteurs

RAZ

ST

1,536 ms — BLK 50 Hz

1,024 ms — BLK 60 Hz

régime synchronisé

## Fig.13

RAZ compteurs

RAZ à
19,456ms — 20,480 ms

FO

50 Hz

RAZ à
23,552 ms

F1

60 Hz

16,384 ms

F

régime d'oscillation libre

IDT